Europäisches Patentamt

(19) European Patent Office

Office européen des brevets

(11) Publication number: **0 058 089**

**A1**

(12) **EUROPEAN PATENT APPLICATION**

(21) Application number: **82300643.2**

(22) Date of filing: **09.02.82**

(51) Int. Cl.³: **H 01 M 12/06**
**H 01 M 4/12**

(30) Priority: **09.02.81 US 232431**

(43) Date of publication of application:
**18.08.82 Bulletin 82/33**

(84) Designated Contracting States:
**DE FR GB**

(71) Applicant: **Ray-O-Vac Corporation**
**101 East Washington Avenue**
**Madison WI 53703(US)**

(72) Inventor: **Dopp, Robert Brian**
**510, Presidential Lane**
**Madison Wisconsin(US)**

(74) Representative: **Hedley, Nicholas James**
**Matthew et al,**
**Thames House (fifth floor) Millbank**
**London SWIP 4QF(GB)**

(54) **A metal-air cell and a method for the manufacture thereof.**

(57) The anode material of a metal air cell often expands on discharge of the cell. The present invention provides a solution to the problem of accommodating such expansion while at the same time providing a cell of satisfactorily low impedance. The cell (10) has a cathode assembly (24) an anode compartment (38) accommodating non-fluid anode material (40) and a separator (36) that separates the anode compartment from the cathode. The cell (10) is centrifuged to force the anode material (40) against the separator (36).

EP 0 058 089 A1

A Metal-Air Cell and a Method for the Manufacture Thereof

The present invention relates to metal-air button cells and particularly to button cells using a zinc anode.

It is known that upon discharge, the anode material in metal-air button cells swells and in the case of zinc-air cells this swelling can amount to an increase of 60% in the anode volume. Such a volume increase must be accommodated within the cell if the cell is to be reliable since pressure exerted on the cathode due to such expansion could cause premature failure. However, it is not enough merely to provide a void in the anode compartment to allow for the expansion because that would allow the anode material to move about in the void whereas it must be hard against the layer that separates the anode material from the cathode in order that the cell should have as low an impedance as possible. Solutions to this problem have been proposed. British Patent Specification No. 1,361,138 describes a cell in which anode material is urged against the separator by a layer of foam material. As the anode material expands on discharge, the foam material is compressed thereby preventing undue pressure being exerted on the cathode. The Specification also describes an arrangement in which the anode material is urged against the separator by a spring-biassed movable wall. The wall is pushed back against the action of the spring by the expanding anode material. A similar solution to the problem is described in U.S. Patent Specification No. 4,054,726, which describes a cell having one or more compressible expansion bodies embedded in the anode mass. As the cell discharges, the anode mass swells and compresses the expansion body without causing destructive pressure to be exerted on the cell cathode. Both these proposals reduce the space available for anode material since the movable wall and the compressible material (even when fully compressed) take up space in the anode compartment.

The present invention is based on the realisation that such elaborate measures are not necessary to allow for the expansion of anode material.

According to the present invention there is provided a metal-air button cell which comprises an air-depolarisable cathode, an anode compartment, a separator layer separating the anode compartment from the cathode, and non-fluid anode material located in the anode compartment against the separator, characterised in that the anode material has been centrifuged and a void exists in the anode compartment into which the anode material can expand on cell discharge.

The anode material is such that it does not move about in the anode compartment irrespective of the movement of the cell itself. Suitable anode material is already known and, in the cell of the present invention, it is preferably a gelled amalgamated zinc powder, and it is preferred that the cell is centrifuged prior to the gell setting.

The present invention further provides a method of manufacturing metal-air button cells having an air-depolarisable cathode, an anode compartment containing non-fluid anode material and a separator layer separating the cathode from the anode compartment, which method comprises placing less anode material in the anode compartment than the compartment can contain, sealing the anode compartment and centrifuging the cell in such a way that the anode material is pressed against the separator.

The optimum conditions for centrifuging can be found empirically, but we have found that the centrifuging force is preferably from 200 to 1400 G, more preferably from 700 to 1200 G, since when the cell

- 3 -

is subjected to forces higher than 1400 G damage to the cathode may occur and, at lower forces, the impedence of the cell is too high. The step of centrifuging the cell should generally last between one and three minutes for optimum effect.

The space occupied by the anode material is preferably from 60 to 90% of the volume of the anode compartment.

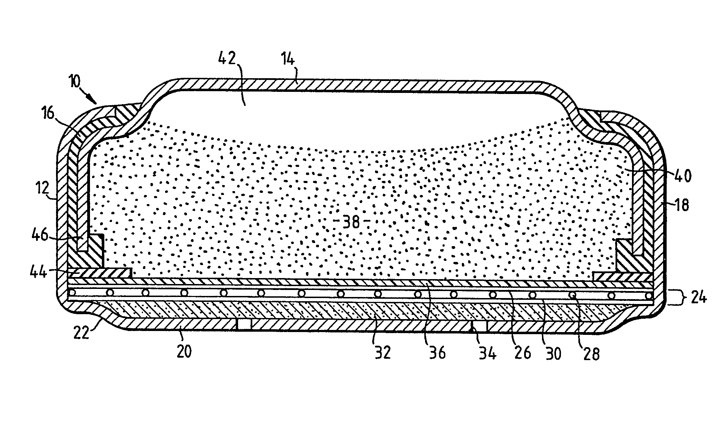

There will now be described, by way of example only, a cell in accordance with the present invention with reference to the accompanying drawing which shows a cross-sectional elevation of the cell.

Referring to the accompanying drawing, the cell 10 is composed of a housing formed by a can 12 and a saucer-shaped cover 14. The can 12 has an open end into which the cover 14 is inserted and the can and the cover are insulated from each other by a grommet 16. The grommet, which is annular and has a J-shaped cross-section, covers the sides and the rim 46 of the cover. The can 12 forms the positive (cathodic) terminal of the cell, while the cover 14 forms the negative (anodic) terminal. The can and the cover may be made of the same or different materials, for example nickel-coated steel, nickel, alloys of nickel and stainless steel. The can has a wall portion 18, a flat bottom portion 20 and a shoulder 22.

Located within the cathode can 12 is an air (oxygen) depolarisable cathode assembly 24 which is a laminar construction composed of an activating layer 26, a porous current collector 28 and a porous hydrophobic layer 30. The activating layer 26 comprises a pressed mixture of activated carbon and a hydrophobic material, for example a polyolefin, e.g. polyethylene, polypropylene or a fluorocarbon for example polytetrafluoroethylene. It is preferred that the activating layer is a mixture of polytetrafluoroethylene and activated carbon. The preferred mixture ratio, by weight, is 50-80% activated carbon and 50-20% polytetrafluoroethylene. More preferred is about 55-65% activated carbon and 35-45% polytetrafluoroethylene. Pressed adjacent to, embedded in or contained within, the material of the activating layer 26 is the current collector 28. The current collector is in electrical and physical contact with the cathode can 12 and made of a conductive metal, e.g. nickel or stainless steel, preferably in the form of a mesh or screen. It is preferred that the current collector is an etched nickel screen. The current collector is etched to improve the bond between the activating layer and the current collector. This improved bond reduces the impedence and increases the capacity characteristics of the cell. It has been found that only a very small amount of etching is required for example the etching may remove of the order of 0.3% to 1.0% of the metal. The etching can be done by any method known to those skilled in the art. However, we used acid etching.

The hydrophobic layer 30 permits the passage of oxygen to the active layer 26 while preventing the electrolyte of the cell from leaking. It is sometimes desirable to use more than one such hydrophobic layer in case one of the layers contains a fault through which the electrolyte can leak. Thus, the use of two or more such layers reduces the risk of electrolyte leakage. The hydrophobic layer 30 is composed of a hydrophobic polymer material having sufficient porosity to permit an amount of oxygen to flow therethrough that is sufficient to provide the desired current density requirement of the cell. Suitable materials include, for example, polyethylene, polypropylene, nylon and polymers of vinylidine chloride, vinyl chloride and fluorocarbons e.g. polytetrafluoroethylene. Polytetrafluoroethylene is the preferred material.

Located between the cathode assembly 24 and the flat bottom of the cathode can 12 is a porous layer 32 that serves both to distribute air uniformly over the cathode assembly and to provide support for the cathode assembly.

Air is admitted to the cathode assembly 24 through one or more holes 34 formed in the flat bottom portion 20 of the can 12. The holes must, of course, be of a sufficient size to admit the required amount of air to the cathode assembly 24.

Above the cathode assembly 24 is located a separator 36 that separates the cathode assembly from the anode compartment 38 of the cell. The separator 36 can be made of any conventional material known in the art. These known materials include Pudo cellophane, Acropor WA (woven nylon base treated with polyvinylchloride), Celgard (microporous polypropylene), Permion (polyethylene grafted with polyvinyl chloride), Viscon (regenerated cellulose treated with polyvinylchloride), Pellon (polyester based), Dynel (acrylic copolymer) and the like.

Located within the anode compartment 38 is the anode material 40, which may be any of the suitable porous materials known to the art, e.g. a gelled amalgamated zinc powder, or a zinc compact. There is a void space 42 between the anode material 40 and the cover 14 accounting for from 60 to 90% of the volume of the anode compartment 38 to allow for expansion of the anode material during discharge of the cell.

An electrolyte solution is added to the cell during assembly and may be any one of the type generally known in the art. A suitable alkaline electrolyte is aqueous KOH or NaOH and a suitable electrolyte for a cell using an organic redox system is an aqueous solution of zinc chloride and mixtures of zinc chloride and ammonium chloride. A suitable substantially neutral electrolyte system is ammonium chloride or manganese chloride or a mixture of manganese chloride and magnesium chloride solution.

A washer 44 made of resilient material is placed on top of the separator 36 and lies around the periphery thereof. It may be made of any non-conductive alkali-resistant resilient material, e.g. polyacetals, ABS (acrylonitrile-butadiene-styrene) resins, polyamides (for example Nylon 6; Nylon 6,6; Nylon 6,10; Nylon 11; and Nylon 12), synthetic rubbers (for example butyl rubber, silicone rubber, ethylene-propylene rubber, and chloroprene rubber), polyolefins (for example polyethylene and polypropylene), fluorocarbons (for example polytetrafluoroethylene) and other polymers such as styrene. The preferred materials are polyethylene and polystyrene.

The grommet 16 may be made of one of the materials listed above in connection with the washer 44, but the washer and the grommet need not be made of the same material. The grommet 16 is preferably covered with an adhesive e.g. an epoxy resin, a polyamide or bitumen prior to incorporation into the cell.

The internal components of the cell are rigidly retained by crimping the top edge of the cathode can 12 over the grommet 16. This presses the grommet 16 and the cover 14 downwardly against the washer 44 which in turn urges the separator 26 and the cathode assembly 24 against the shoulder 22 of the can 12. Under the influence of the applied crimping pressure, a seal is produced between the grommet 16 and the annular ring 44, between the annualar ring and the separator 36 and between the cathode assembly 24 and the shoulder 22 of the cathode can 12 so that electrolyte cannot creep around the cathode assembly and leak through the air holes 34.

After crimping the cathode can 12, the completed cell is centrifuged in a manner which moves the zinc against the separator. It has been found that when the centrifuge time is about one minute, a 200 G force is insufficient to obtain the desired effect and at about 1400 G damage to air cathode can occur. The preferred centrifugical force is about 700-1200 G, or more preferably about 900 G when the centrifuge time is one minute. These skilled in the art can easily ascertain the force to utilize for lower or greater time periods of treatment. However, it has found that when 900 G are used the maximum effect is obtained between one to three minutes, after which time no greater effects are obtained, and it is possible to start to damage the air cathode.

### EXAMPLE

Cells of the general design shown in the accompanying drawing were made, but only half of them were subjected to a step in which they were centrifuged for one minute at a force of 800 G. The remainder were not centrifuged. The impedance in ohms of the cells at 100 Hz was then measured. The results were as follows:

| | Impedance of Non-Centrifuged Cells | | | Impedance of Centrifuged Cells | |
|---|---|---|---|---|---|
| 1 | 8.19 | ± 2.6 | | 1.95 ± | 0.18 |
| 2 | 5.36 | ± 2.3 | | 1.98 ± | 0.40 |
| 3 | 4.17 | ± 2.9 | | 1.99 ± | 0.23 |

It can be seen from the results that the centrifugal cells exhibited lower and more consistent impedance than the uncentrifuged cells.

- 8 -

Claims

1.       A metal-air button cell (10) which comprises
an air depolarisable cathode (24), an anode compartment
(38), a separator layer (36) separating the anode
compartment from the cathode and non-fluid anode
material (40) located in the anode compartment against
the separator, characterised in that the cell has been
centrifuged and a void (42) exists in the anode compartment into which the anode material can expand on cell
discharge.

2.       A cell as claimed in claim 1, characterised
in that anode material (40) occupies from 60 to 90% of
the volume of the anode compartment (38).

3.       A cell as claimed in claim 1 or claim 2,
characterised in that the anode material (40) comprises
zinc.

4.       A cell as claimed in claim 3, characterised
in that the anode material (40) is a gelled amalgamated
zinc powder.

5.       A method of manufacturing a metal-air button
cell (10) having an air-depolarisable cathode (24), an
anode compartment (38) containing non-fluid anode material
(40), and a separator layer (36) separating the cathode
from the anode compartment, which method comprises placing
less anode material in the anode compartment than the
compartment can contain, sealing the anode compartment
and centrifuging the cell in such a way that the anode
material is pressed against the separator.

6.       A method as claimed in claim 5, characterised
in that the anode material (40) is gelled amalgamated
zinc powder.

7.       A method as claimed in claim 6, characterised
in that the cell is centrifuged before the anode material
has set.

8.       A method as claimed in any one of claims 5 to 7, characterised in that the centrifuging exerts a force on the cell of from 200 to 1400 G.

9.          A method as claimed in claim 9, characterised in that the force is from 400 to 1200 G.

10.          A method as claimed in claim 8 or claim 9, characterised in that the force caused by centrifuging the cell is exerted for from 1 to 3 minutes.

1/1

0058089

Application number

EP 82300643.2

**EUROPEAN SEARCH REPORT**

European Patent Office

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| A | GB - B - 1 467 708 (GOULD) <br> * Example * <br> ---- | 1 | H 01 M 12/06 <br> H 01 M 4/12 |

TECHNICAL FIELDS SEARCHED (Int.Cl. ³)

H 01 M

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | | |
|---|---|---|---|
| Place of search <br> VIENNA | Date of completion of the search <br> 13-05-1982 | Examiner <br> LUX | |

EPO Form 1503.1   08.78